(19) **Europäisches Patentamt**
**European Patent Office**
**Office européen des brevets**

(11) **EP 2 662 329 A1**

(12) **EUROPEAN PATENT APPLICATION**

(43) Date of publication:
**13.11.2013 Bulletin 2013/46**

(51) Int Cl.:
***C01B 15/037*** (2006.01)   ***C01F 11/46*** (2006.01)

(21) Application number: **12167726.4**

(22) Date of filing: **11.05.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Creachem SA**
**1920 Martigny (CH)**

(72) Inventors:
• **Lakaye, Frédéric**
 **62780 Stella Plage (FR)**
• **De Windt, Wim**
 **9040 Sint-Amandsberg (BE)**

(74) Representative: **Plucker, Guy et al**
**Office Kirkpatrick S.A.**
**Avenue Wolfers, 32**
**1310 La Hulpe (BE)**

(54) **Peroxygen release compositions and method for producing them**

(57)   Stabilized peroxygen containing compositions are disclosed, both in thickened viscous form and in dry form. The compositions contain newly synthesized calcium sulfate crystals that function as a thickener and stabilizing agent against metal-catalyzed decomposition. The invention discloses a composition comprising 0.5 wt % to about 50 % wt of hydrogen peroxide, 2.0 wt % to about 80.0 % wt of newly synthesized calcium sulfate crystals, being of individual sheet or needle shape, and water, said composition having a viscosity of about 200 cP to about 20,000 cP. The invention further provides a process for making same, comprising the reaction of a water soluble calcium containing salt with sulfuric acid or a salt thereof in an aqueous hydrogen peroxide solution at a reaction temperature of up to 80 °C in a mixing apparatus, followed by a concentration step in order to thicken into a stable viscous dispersion or paste containing at least 2 wt % and preferably 10 wt % to 15 wt % of $CaSO_4$. The compositions are suitable for use as disinfectants, as cleaning agents, and in a variety of personal care, pharmaceutical, textile bleaching and industrial applications.

**EP 2 662 329 A1**

**Description**

FIELD OF THE INVENTION

The present invention relates to the fields of disinfection, cleaning, personal care, pharmaceutical, textile bleaching and industrial applications.

TECHNOLOGICAL BACKGROUND OF THE INVENTION

Hydrogen peroxide is a universally useful and environmental friendly oxidizer, sanitizer and disinfection agent. It is a liquid, making it convenient for a large number of bleaching applications. Hydrogen peroxide is a weak acid and in aqueous solutions dissociates slightly (Equation 1).

$$\text{Eq. 1.} \qquad\qquad H_2O_2 \;\rightleftharpoons\; H^+ + HO_2^-$$

Liquid hydrogen peroxide is an important component of many cleaning, disinfection and sanitizing formulations in sectors SUCH AS food processing, industry/institutional cleaning, consumer goods, medical and health care, and in the agricultural sector. Often, the active component hydrogen peroxide is combined with an alcohol, foaming agents, thickening agents, fragrances, emulsifiers, surfactants, and /or ammonia salts in the final application.

Undissociated hydrogen peroxide is relatively stable, and for this reason most commercial products are adjusted to an acid pH. Dissociated hydrogen peroxide breaks down into oxygen and water over a fairly short period of time, and leaves no residue. As a sanitizer it is typically used at concentrations of 0.015 - 0.5 %. At 2-3 % it is classified as a disinfectant.

Hydrogen peroxide is also the active component of many bleaching applications in the field of detergents, laundry, paper & pulp. In textile bleaching, hydrogen peroxide is the most common bleaching agent for protein fibers such as wool and silk, and it is also used extensively for bleaching cellulosic fibers such as cotton.

Hydrogen peroxide bleaching is performed in alkaline solution where part of the hydrogen peroxide is converted to the perhydroxy anion (Equation 1). The perhydroxy anion $HO_2^-$ is generally believed to be the active bleaching species and its concentration in solution increases with hydrogen peroxide concentration, alkalinity and temperature. The alkaline agents most commonly used to generate $HO_2^-$ are caustic soda, carbonates, silicates, pyrophosphates and polyphosphates. Stabilizers are usually added in bleaching products to avoid uncontrolled decomposition reactions of hydrogen peroxide (polyaminocarboxylates, stannates, silicates, etc.).

In bleaching applications, solid oxygen bleaches are preferred for stability and for reasons of compatibility with other sensitive ingredients. Certain solutions in the art allow hydrogen peroxide to be stored and applied in a dry form, most notably certain persalt powders or granulates. Persalts are salts that release a peracid or peroxy component in the solute water. Persalts and formulations thereof are used as components in a broad range of applications, especially in bleaching. The most commonly used and best known persalts for bleaching formulations are sodium percarbonate and sodium perborate (mono- and tetra hydrate). These products are soluble in water and release, by hydrolysis, hydrogen peroxide and carbonate or metaborate (and, finally, boric acid), together with their counter-ions, respectively, in water. Another solid oxygen bleach is peroxymonosulfuric acid (PMS), the peroxygen reaction product of hydrogen peroxide and sulfuric acid. PMS is a powerful oxidizing agent, the commercially available salt of which (potassium peroxymonosulfate) is a white solid having a satisfactory shelf life and an active oxygen content of about 4.4%.

Whereas these existing solutions from the prior art have many very useful applications, they also have their drawbacks and unwanted side effects. Perborate is cited as a non-environmentally-sustainable source of peroxide. Boron is ubiquitous in the environment, but substantial deposits of borates are relatively rare. Some studies have implicated boron compounds in causing developmental defects and effects on fertility. Possible effects of sodium perborate are assumed to be due to the degradation product boric acid.

Moreover, perborate compounds, mainly used in bleaching applications, and to a minor extent in disinfection, are known to be less effective in the lower temperature ranges (requiring an activator) because of decomposition mainly at elevated temperatures.

Percarbonate on the other hand, is more active at lower temperatures compared to perborate. Sodium percarbonate is an attractive persalt for use in detergent compositions: when dissolved in water, sodium percarbonate can eventually release sodium carbonate and hydrogen peroxide. Sodium percarbonate is weight efficient and, after giving up its available oxygen, provides a useful source of carbonate ions for detergency purposes. Hydrogen peroxide and sodium carbonate are known to be environmentally safe, and do not harm textiles when bleaching. The conventional washing powders generally contain sodium percarbonate along with zeolite, a detergent builder, which accelerates the decomposition of sodium percarbonate. Therefore, it is common practice to coat the surface of sodium percarbonate grains with borate, silicate, sulfate or carbonate when it is used together with zeolite, in order to increase stability. Still, sodium percarbonate is generally described as having relatively low stability in detergent formulations. Therefore, many specific processes have been developed to further improve its stability and shelf-life.

Technical grade sodium percarbonate has also been registered by the EPA (US Environmental Protection Agency) as a pesticide, to be used in the formulation of end-use pesticide products (algaecide and fungicide). Sodium carbonate peroxyhydrate is transformed into hydrogen peroxide and sodium carbonate in the presence of water. The hydrogen peroxide oxidizes the critical cellular components of the target organism and thus kills them.

Stabilized thickened compositions releasing hydrogen peroxide are further suitable as disinfectants, as cleaning agents and in various personal care applications such as hair and tooth whitening. Polymeric thickening agents are added to these compositions to increase their residence time on non-horizontal surfaces as well as to enhance the aesthetics of the composition, to improve ease of use, and to suspend other components of the composition. Decomposition of hydrogen peroxide caused by catalytically active substances like metal ions, is difficult to prevent. Moreover, many of the conventional polymeric thickening agents accelerate the decomposition of hydrogen peroxide and are themselves unstable in the presence of hydrogen peroxide. Decomposition of the polymeric thickening agents reduces the viscosity of the cleaning composition, reducing its ability to cling to non-horizontal surfaces.

## AIM OF THE INVENTION

Certain solutions in the art allow hydrogen peroxide to be stored and applied in a dry or viscous liquid form, most notably certain persalt compositions or thickened hydrogen peroxide compositions. When hydrogen peroxide needs to be produced quickly, both perborate and percarbonate salts have the disadvantage that it takes some time to chemically react with water, dissolve and release the reactive perhydroxy anion. This reaction is dependent on temperature, and these salts dissolve faster in warm (percarbonate) to hot (perborate) water. This is the reason why commercial products containing percarbonate salts require warm to hot water to work effectively.

Typical laundry detergent applications have been changing over time: whereas the traditional way of washing was at hot temperature, this has been changing to either warm or cold wash, and in some areas washing has been traditionally carried out at room temperature.

Dissolving speed in the low temperature range plays a crucial role in effective utilization of sodium percarbonate, especially in cleaning and disinfection of hard surfaces, including textiles. Traditional chemicals used to increase the dissolution rate, such as phosphorus-containing agents, are no longer accepted from an environmental point of view.

The prior art requires peroxygen release compositions which must be stable in dry form and in liquid form, with decomposition reactions during shelf life reduced to a very limited extent, and being compatible with other sensitive ingredients in such formulations such as bleach or laundry formulations, cleaning products or sanitizing and disinfection compositions. These peroxygen release compositions must rapidly produce hydrogen peroxide in water at low temperatures. In a dry form, these peroxygen release compositions must have a density and granulate size which is compatible with other ingredients in powder formulations.

In liquid form, the peroxygen release composition preferably exhibits a certain viscosity compatible with commercial liquid bleach formulations and sanitizing formulations suitable for foam spraying or other methods of application. There is a need in the prior art for thickened hydrogen peroxide releasing compositions that are more stable over time, especially in the presence of catalytically active substances such as metal ions. Environmental considerations further require a reduced presence or total absence of phosphates, and also borate is becoming more and more an undesirable component.

In conclusion, both in liquid and dry peroxygen compositions for use in cleaning and disinfection applications, there is a need for environmentally acceptable compositions that show enhanced stabilitty, and an enhanced hydrogen peroxide release rate in water in the low temperature range. The present invention relates to a stable viscous peroxygen release composition, containing a non-polymeric thickening agent, not containing environmentally-burdening phosphorus, borate or perborate, and characterized by an enhanced stability in the presence of metal ions. In a further embodiment of this invention, the peroxygen release composition may further be dried into a powder, granular composition or a dried composition with any shape or volume.

## PRIOR ART

Many additives to stabilize persalts have been described in the patent literature such as sodium silicate (UK Patent No. 174,891), benzoic acid (German OS. No. 1,767,796), chelating agents or sequestrants such as ethylenediamine tetraacetic acid (EDTA), complex organo-phosphates (US Pat. Nos. 3,234,140 and 4,477,390), and many others. Stability, especially of percarbonate salts in contact with alkaline detergent components, remains an issue however, and some solutions proposed to improve stability are only effective if storage is in dry air at 20 °C. Active oxygen losses of 40 % and more are reported to occur within 15 days if the stability test is carried out at 40 °C and 80 % air humidity (German OS No. 2,511,143).

If the dissolution rate of sodium percarbonate in water is relatively poor, the sodium percarbonate is not totally dissolved during the wash cycle, and is thus either released into the sewage water or remains into the clothes without effective bleaching or sterilization (Hwa Lee S. et al., US 6,465,408). For the effective action of the compound, hydrolysis into hydrogen peroxide is mandatory.

Dissolution rate plays a crucial role in effective utilization of sodium percarbonate. Although the solubility of sodium percarbonate is inherently good, it is also frequently decreased, for example, by the presence of other salts, which inevitably result from the manufacturing process, such as sodium carbonate (Doetsch W. et al., US 6,248,707). Certain solubilizing agents were included in the past in the persalt formulation, such as alkali metal phosphates, particularly sodium dihydrogen phosphate, or phosphoric acid in liquid formulations, which increased the solubility of the perborate or the percarbonate. Phosphates played also a number of other roles. Today P-free detergents are demanded and phosphate is no longer accepted or only in very limited amounts, for ecological reasons. It is since long reported that large producers, e.g. in Belgium, have now shifted to P-free detergent especially since the production of tablets and liquid detergents (DETIC, press comm. 2001). Different chemicals are today required to achieve comparable performance at an affordable price.

Moreover, the bulk density attainable or the particle size of sodium percarbonate generally can be varied only slightly by the manufacturing methods of the state of the art and is mostly limited from the very start to a narrow range by the type of method or by the sodium carbonate used. To meet the different requirements of the detergent manufacturers, the bulk density and particle sizes also need to be controlled, for example for uses in light powder detergents with a low bulk density or in compact detergents with a high bulk density of the detergent, bleach and cleaning agent components. It is also necessary to essentially match the bulk densities of the individual components to each another, in order to largely preclude segregation.

Liquid laundry products such as liquid detergents and liquid bleach formulations have become increasingly popular in the last few years. However, a peroxy bleach system such as is found in powdered detergents based on sodium percarbonate or perborate exhibits poor storage stability in aqueous liquid detergent formulations. A number of prior art studies has focused on stabilizing aqueous persalt solutions with stabilizing agents (e.g. Woods W.G., US 5,380,456). The present invention seeks to overcome this stability issue.

For thickened liquid hydrogen peroxide compositions suitable for use in a variety of disinfectant, cleaning, personal care, pharmaceutical, textile and industrial applications, stabilizers have also been developed to improve the stability of the thickened composition. Stabilizers are discussed, for example in US Patent numbers 5,997,764 and 6,083,422. Wang identifies an improvement by adding, next to a polymeric thickening agent, also a 3-component stabilizer system, including phosphorous-containing stabilizers in US 7,045,493. Polymeric organic substances are inherently unstable in contact with hydrogen peroxide, since the latter is an oxidant and may oxidize organic molecules. Presence of metallic ions or organic impurities further catalyze hydrogen peroxide decomposition.

GENERAL DESCRIPTION OF THE INVENTION

In a first aspect, this invention relates to a new peroxygen release composition that may contain between 0.5 w % and up to 50 w % of hydrogen peroxide.

Solid particles of calcium sulfate, when synthesized into a solution of hydrogen peroxide, were surprisingly found to result in a viscous dispersion that may function as a stable peroxygen release system. Such a stable dispersion cannot obtained when preformed calcium sulfate is added to a hydrogen peroxide solution: the particles of calcium sulfate are preferably *de novo* synthesized into the hydrogen peroxide solution. The dispersion may then be further dried into a stable, white powder. The viscous dispersion according to this invention is stable without any additional stabilizing agent for hydrogen peroxide, during several months at room temperature. This is surprising, given that most known hydrogen peroxide formulations are unstable unless stabilized by additional stabilizing agents. Without being bound by theory, this advantageous effect may be related to the removal of metal ions by precipitation onto the calcium sulfate fiber, needle or sheet shaped crystals, thereby effectively inactivating the metal ions and preventing catalytic hydrogen peroxide decomposition.

The peroxygen release compositions above may be associated with 2 % to 80 %, e.g. 5 % to 20 % by weight or 60 % to 80 % by weight, of a precipitated calcium sulfate component. Within said embodiment, the weight proportion of said calcium sulfate component may be determined by any quantitative means that do not increase temperature too much, e.g. not higher than 45 °C, in order not to decompose the peroxygen component. Suitable means are, for instance, drying of a sample in an oven at 40 °C during 24 hours. Within this embodiment, the hydrogen peroxide may be distributed onto or inside of the calcium sulfate particles, or the  hydrogen peroxide may also, either completely or in part, be added (reaction of addition) to the calcium sulfate crystals in order to form a calcium sulfate perhydrate compound. Individual calcium sulfate crystals according to any of the above embodiments of the invention preferably exhibit needle-shape with an average needle length in the range of 10 μm to 150 μm. During drying, and depending on the drying method, these calcium sulfate particles may agglomerate into larger aggregates, e.g. aggregates of tens or hundreds of μm to several mm.

The stability of calcium sulfate crystals at low and neutral pH to slightly alkaline values allows the viscous peroxygen release formulation to be stable in a broad range of pH, even as low as pH 1.5. In acid pH range, hydrogen peroxide is known to be in the undissociated form, thereby exhibiting increased stability.

In a second aspect, this invention relates to a method for producing a peroxygen release composition, comprising steps of:

(a) reacting a water soluble calcium containing salt with sulfuric acid or a salt thereof in an aqueous hydrogen peroxide solution at a reaction temperature of 5 to 80 °C, preferably15 to 40 °C, in a mixing apparatus with a rapid and intensive mixing into a white dispersion of calcium sulfate crystals.
(b) thickening the dispersion through a suitable concentration technique into a moist, viscous, pasty composition

In contrast to known production methods, no stabilizing agents need to be added to any of the above mentioned solutions in order to generate a stable peroxygen release composition at the end.

In a preferred embodiment of this method, thickening of the dispersion is achieved by disc centrifugation, decanter centrifuge or filtration.

In a further embodiment, said peroxygen release composition is dried to a dry product or powder by applying a suitable drying technique to said dispersion. Said dry product may be further treated to obtain granules, said granules having an active oxygen content of about 5 % wt to about 20 % wt. In yet another embodiment, the viscous composition may be dried into the desired volume or shape.

In a preferred embodiment, the suitable dehydration or drying technique does not raise the product temperature above the range of 60 °C to 80 °C during drying. In another embodiment of this method, a suitable additive such as a phosphonate may be added to the dispersion before drying.

DETAILED DESCRIPTION OF THE INVENTION

According to a first aspect, the invention concerns a peroxygen release composition comprising a dispersion of calcium sulfate in an aqueous hydrogen peroxide solution, the calcium sulfate being formed in hydrogen peroxide and present as crystals in fibre, needle or sheet form with an average crystal length in the range of 1 μm to 300 μm, the hydrogen peroxide being present in an amount comprised between 0.5 and 50 w %, the calcium sulfate being present in an amount comprised between 2.0 and 80.0 W %, and the composition having a viscosity of about 200 cP to about 20,000 cP, in the absence of additional thickening agent.

When a dispersion is sought, the calcium sulfate content is advantageously comprised between 2 and 20 w% of the composition.

When an essentially dry composition is sought, calcium sulfate concentrations between 50 and 80 w% are advantageous, preferably 60 to 80 w %.

In contrast to known products, the peroxygen release composition of the present invention or produced by the present process unexpectedly can release a high percentage of the contained hydrogen peroxide immediately upon dispersion or dissolution in water at ambient room temperature or in cold water. In a preferred embodiment, a stable, thickened dispersion of the peroxygen release compound can be produced in high concentrations without the need for stabilizing agents during the crystallization or precipitation process. The addition of typical stabilizing agents such as phosphate-rich or complex organic molecules may thus be omitted, thereby avoiding the release of potentially harmful molecules to the environment. In the present invention, said peroxygen release composition can be produced in high concentrations and can easily be separated from the original solvent, e.g. based on density difference by centrifugation. This allows for a cost-effective production method.

According to the present invention, the calcium sulfate crystals are preferably formed *de novo* by precipitation, by reacting dissolved calcium ions and sulfate ions in hydrogen peroxide solution. It has been found that when preformed commercial calcium sulfate is added to a hydrogen peroxide solution, the dispersion quickly becomes unstable and hydrogen peroxide starts to decompose. Moreover, preformed calcium sulfate at concentrations in the range of 2 wt % to 15 wt % did not result in sufficient viscosity increase of the composition in the range of about 200 cP to about 20,000 cP. When producing the calcium sulfate crystals within the hydrogen peroxide solution in accordance with the present invention, however, it is thus possible to obtain a stable and viscous peroxygen release composition.

According to the present invention, either calcium or sulfate containing salts, e.g. calcium chloride ($CaCl_2.2H_2O$) or sodium sulfate ($Na_2SO_4$), or sulfuric acid, are preferably essentially free of impurities. Said aqueous hydrogen peroxide solution may be a 1 to 70 % by weight solution. Hydrogen peroxide solutions suitable for the present invention are technical grade hydrogen peroxide, e.g. a commercial 27.5 % hydrogen peroxide solution with a pH in the range of 1.5 - 4.0. In another embodiment of the present invention, the hydrogen peroxide solution may be a food grade product.

According to a preferred embodiment of the invention, the calcium sulfate may be present in an amount of 2 to 15 % wt. According to a more preferred embodiment, the calcium sulfate is present in an amount of 3 to 12 % wt, or even more preferably 4 to 10 % wt.

The molar ratio of calcium to sulfate may advantageously be comprised between 0.5 to 1 and 1 to 4.

Importantly, the calcium sulfate used in the following illustrative embodiments can be efficiently produced at concentrations of about 25 to about 100 kilograms ($CaSO_4$) per $m^3$ of hydrogen peroxide solution, resulting in a dispersion of calcium sulfate in hydrogen peroxide. Said dispersion, according to the present invention, can be further thickened by a suitable concentration step, resulting in a viscous dispersion or paste with a final concentration of $CaSO_4$ in the range of about 100 to about 200 kilograms ($CaSO_4$) per $m^3$ of hydrogen peroxide solution. No stabilizing agents need to be added to any of the above mentioned solutions in order to generate a stable viscous peroxygen release composition at the end.

According to the present invention, the calcium sulfate crystals can be produced with a controllable size distribution in the hydrogen peroxide solution. In a preferred embodiment, the size can be controlled by the control of the reaction time between the calcium and sulfate ions, e.g. a $CaCl_2.2H_2O$ solution and a $Na_2SO_4$ solution in a hydrogen peroxide solution. By increasing the reaction time between said solutions, before thickening of the dispersion, the calcium sulfate crystals have a tendency to grow longer. According to the following illustrative embodiments, the crystal length can be varied between micrometer to hundreds of micrometer by controlling the reaction time. When studied by microscopy, the calcium sulfate crystals formed according to the present invention increased from about 10 $\mu$m after 1 minute of reaction time, to about 100 $\mu$m after 60 minutes of reaction time, without stirring. During the growth process, the crystal shape may change from fiber or wire-shaped to needle shaped and eventually sheets. Sheets may be composed of a combination of fibers, wires or needles into one crystal structure.

In another preferred embodiment, the size of the calcium sulfate crystals can be controlled by adjusting the temperature during the reaction between the calcium and sulfate ions in solution, e.g. the temperature of the solutions is increased to about 35 °C.

According to yet another preferred embodiment, the size of the calcium sulfate crystals can be controlled by adding a suitable solvent, e.g. ethanol, to the calcium and sulfate containing salt solutions in hydrogen peroxide.

According to a preferred embodiment, the composition additionally comprises an additive to control crystal growth selected from the following organic compounds: phosphonate, such as N,N,N',N'-ethylenediaminetetra (methylene phosphonic acid), *N,N,N',N'*-triethylenediaminetetra (methylene phosphonic acid), diethylenetriamine penta(methylene phosphonic acid), an acrylic-acid based polymer (polyacrylic acid), ethanol, or any combinations thereof.

According to yet another embodiment of the invention, calcium sulfate crystal growth may be stopped by addition of an organic compound such as a phosphonate compound or an acrylic-acid based polymer.

In general, small calcium sulfate particles with good dispersive behavior result in little agglomeration. Larger calcium sulfate particles result in higher viscosity of the peroxygen release composition, compared to smaller particles at the same concentration of $CaSO_4$. For these reasons and others, the size and shape of the calcium sulfate crystals according to the present invention are important characteristics of the peroxygen release composition. In a preferred embodiment, the average length of calcium sulfate crystals is in the range of about 10 $\mu$m to about 150 $\mu$m.

It has been found that ions originating from a $Ca^{2+}$ and/or $SO_4^{2-}$ containing salt, used for the production of the peroxygen release composition according to the present invention, such as for example chloride (e.g. originating from $CaCl_2.2H_2O$), nitrate (e.g. originating from $Ca(NO_3)_2$), sodium (e.g. originating from $Na_2SO_4$) or potassium (e.g. originating from $K_2SO_4$), enhance the crystallization rate of the calcium sulfate component during the production process of said composition. This may be related to said ions having an effect on the influence of supersaturation on the calcium sulfate precipitation process.

Peroxygen release compositions according to the current invention are found to be relatively stable over time, in the pH range of about 1.5 to about 8.5. Especially in the lower pH range, where hydrogen peroxide is mainly present in its undissociated form, hydrogen peroxide compositions are known to be more stable. Prior art compositions of persalts or compositions containing hydrogen peroxide are clearly unstable in the presence of metallic ions or other catalysts for hydrogen peroxide decomposition. The peroxygen release composition of the present invention or produced by the process of the present invention unexpectedly shows increased stability in the presence of metal ions. It is believed the metal deactivation mechanism by the peroxygen release composition of the present invention works as follows: heavy metals adsorb on colloids of calcium sulfate or metal is encapsulated into calcium sulfate precipitates. The metallic compounds are thus rendered unavailable for reaction with hydrogen peroxide. The high surface area and surface properties of the calcium sulfate component of the present invention, may contribute to metal adsorption and further deactivation.

A concentrated, thickened dispersion of the peroxygen release composition, for instance with a viscosity in the range of 5,000 - 20,000 cP, according to the present invention can be diluted with water, for example diluted 1 to 10 times, preferably 2 to 5 times, resulting in a stable dispersion with a decreased viscosity, e.g. in the range of 200 cP - 1,000 cP. The diluted dispersion contains less % wt active oxygen, however still has sufficient viscosity to cling to non-horizontal surfaces or maintain small gas bubbles in a stable foam that does not readily collapse. These characteristics may make the product particularly interesting in cleaning or disinfection applications.

In a further embodiment, to broaden the disinfectant-spectrum or bleaching action of the composition, suitable additives may further be added to the composition, preferably selected from acetic or peracetic acid, iodophores, enzymes, surfactants, quaternary ammonium salts, benzalkonium chloride, benzoyl peroxide, persulfate, ethanol, and any combination thereof.

According to a further embodiment, the peroxygen release composition according to the current invention is further dried to obtain a powder, granulate or dried composition with any shape of volume, such as tablets. In a preferred embodiment, said composition is dewatered with a suitable drying technology into a composition containing:

- at least about 50 wt % of calcium sulfate
- at least about 5 % wt to about 20 % wt of activated oxygen
- at most about 20 % wt of water.

A peroxygen release composition according to any of the above embodiments may release at least 40 % to 80 % of the activated oxygen present in said composition, e.g. 50 % to 70 % of the activated oxygen, within 30 seconds after dispersion of said composition into water. The peroxygen release composition may be partially or entirely dissolved into the water. The water solubility of the peroxygen release composition according to the present invention is at least 2 g/l to about 100 g/l. The limiting factor is the water solubility of the calcium sulfate component of said composition, being in the range of 2 - 2.5 g/l in pure tap water at 20 °C. The maximum water solubility of 100 g/L could hence only be reached with a peroxygen release composition comprising 2 % wt of calcium sulfate. Importantly, calcium sulfate solubility in water increases when temperature decreases, hence said peroxygen release composition is suitable for the quick release of hydrogen peroxide in cold water.

According to a second aspect, the invention relates to a method for producing a peroxygen release composition, comprising the steps of:

(a) reacting a water soluble calcium containing salt with sulfuric acid or a salt thereof in an aqueous hydrogen peroxide solution at a reaction temperature of 5 to 80 °C in a mixing apparatus with a rapid and intensive mixing, advantageously at a rate comprised between 100 and 1000 rpm, into a white dispersion of calcium sulfate crystals;
(b) thickening the dispersion through a suitable concentration technique into a moist, viscous, pasty composition preferably until a stable viscous dispersion or paste containing at least 2 wt % and preferably 10 wt % to 15 wt % of $CaSO_4$ is obtained.

In a preferred embodiment of this method, the mixing step is continued until calcium sulfate particles are formed having attained a suitable size in the range of 1 $\mu$m - 300 $\mu$m.

The reaction temperature is advantageously between 15 °C and 40 °C.

In an industrial production process, the reaction may be designed as a batch crystallization process, as a continuous crystallization process, as a once-through flow system, or other suitable process designs.

The water soluble $Ca^{2+}$ salt may be either added to the reaction as a solid, as a concentrated solution in water or as a concentrated aqueous hydrogen peroxide solution. Suitable calcium salts are e.g. calcium chloride or calcium nitrate. The $SO_4^{2-}$ salt may be either added to the reaction as a solid or as a concentrated aqueous hydrogen peroxide solution, in order to have the final solution as concentrated as possible. Suitable sulfate salts are e.g. sodium sulfate, sodium bisulfate or potassium sulfate.

According to a preferred embodiment, a crystallization process control agent may be added during the reaction in the mixing apparatus, selected from the following organic compounds: phosphonate, such as *N,N,N',N'*-ethylenediaminetetra (methylene phosphonic acid), *N,N,N',N'*-triethylenediaminetetra (methylene phosphonic acid), diethylenetriamine penta(methylene phosphonic acid), an acrylic-acid based polymer (polyacrylic acid), ethanol, or any combinations thereof.

A crystallization process control agent may further be added after the thickening step, to the viscous dispersion or paste, selected from the following organic compounds: phosphonate, such as *N,N,N',N'*-ethylenediaminetetra (methylene phosphonic acid), *N,N,N',N'*-triethylenediaminetetra (methylene phosphonic acid), diethylenetriamine penta(methylene phosphonic acid), an acrylic-acid based polymer (polyacrylic acid), ethanol, or any combinations thereof.

In a preferred embodiment of this method, thickening of the dispersion is achieved by disc centrifugation, decanter centrifuge or filtration.

According to a further embodiment, said peroxygen release composition is dried to a dry product or powder by applying a suitable drying technique to said dispersion, such as spray drying, fluidized bed drying, evaporation, vacuum drying, drying by air, belt drying, drying in a rotating drum, or any other suitable technique to remove moisture. The drying may be applied directly to the said dispersion or to the thickened dispersion, obtained by a suitable concentration technique.

According to another embodiment, said dry product may be further treated by compacting to shells, breaking and screening the shells, dry granulating the broken and screened material to obtain a granulate, said granulate having an activated oxygen content of about 5 % wt to about 20 % wt. In yet another embodiment, the viscous composition may be dried to any other solid form of any shape or volume, such as produced by cutting, breaking, compacting or molding the viscous composition into the desired shape before drying.

According to a preferred embodiment, the suitable dehydration or drying technique does not increase the product temperature above the range of 60 °C to 80 °C during drying. According to another embodiment of this method, to limit peroxygen losses during the drying process, a suitable additive such as a phosphonate may be added to the dispersion before drying, e.g. to the concentrated sediment obtained by centrifugation of the dispersion, in a concentration of about 1 % wt to about 5 % wt, preferably about 1 % wt to 3 % wt.

The peroxygen release composition of the invention may be used in liquid or solid oxygen bleaches for applications in the fields of detergents, laundry, paper & pulp. The composition according to the present invention is further suitable for use in disinfectants, cleaning agents, pharmaceutical, textile and industrial applications and in various personal care applications such as hair and tooth whitening. The viscosity and bright white color of the thickened dispersion, make the composition very compatible with commercial liquid bleach formulations and sanitizing or disinfecting formulations suitable for foam spraying or other means of application on non-horizontal surfaces. The composition may also be suitable for use in wound care or wound dressing bandages.

The present invention is not restricted to the exemplified embodiments and the scope of protection extends to variations and modifications that fall within the scope of the claims.

EXAMPLE I.

200 g $Na_2SO_4$ was dissolved in 500ml 27,5% hydrogen peroxide (technical grade, pH = 2.5) by magnetic stirring and slight heating to 30 °C. Meanwhile, 200 g calcium chloride dihydrate ($CaCl_2.2H_2O$) was dissolved in a further 500 ml 27,5% hydrogen peroxide volume. When both salts were completely dissolved, the two clear solutions were poured together and a white precipitate started to form immediately, indicating calcium sulfate crystallization. The dispersion was stirred at ambient temperature during 3 hours. The dispersion was then divided into two portions of 500 mL each. To remove the excess of liquid, one portion of the dispersion was put over a filter paper with a pore size of maximum 5 $\mu$m, and allowed to concentrate overnight. The second portion of the dispersion was centrifuged at 2,500 x g during 10 minutes. Both concentration methods resulted in a thickened paste-like dispersion. A total of 650 g thickened dispersion at pH 2 was obtained. The concentration of active oxygen in the thickened dispersion was determined either by an adaptation from the method described by Schumb *et al* (1955), a method based on a titrimetric measurement based on permanganate titration in an acid environment, or by dilution in water and measure with peroxide colorimetric dipsticks reagent strips (Merck). The dispersion was found to contain 25 % wt to 30 % wt of active oxygen.

Table 1. Summary of main characteristics of the composition

| Total mixed Volumes | Thickened dispersion obtained | $H_2O_2$ capacity | pH |
|---|---|---|---|
| 1L | 650 g | 25 - 30 % wt | 2 |

The dry weight of the white composition was determined by drying during 24 h in an oven at 40 °C. The % DM (Dry Matter) was determined to be approx. 20 - 22 %. A large portion of the dry weight could be attributed to calcium sulfate.

The composition was found to be stable over time. After 2 months of storage at ambient temperature, the active oxygen content was found to be 22 % wt - 25 % wt. The viscosity of the composition was in the range of 10,000 cP.

A 50 g aliquot of the composition was further diluted 5 times with tap water, and resulted in a stable dispersion of approx. 5 % wt active oxygen. After 1 month, the sample still contained approx. the same concentration of active oxygen. The viscosity was about 500 cP.

EXAMPLE II.

The composition obtained from Example I was distributed over 50 g aliquots. To each aliquot, the pH was changed by addition of HCl and NaOH and stability of the composition over a broad pH range was studied.

Table 2. Stability of the composition at different pH

| pH | 0.5 | 2 | 4 | 6 | 8 | 10 |
|---|---|---|---|---|---|---|
| Stable Y/N | N | Y | Y | Y | Y | N |

At pH 0.5 and pH 10, gas bubbles started to from out of the dispersion, indicating decomposition of the active oxygen. The composition was found to be stable at least in the pH range 2 - 8.

EXAMPLE III.

100 g $Na_2SO_4$ was dissolved in 500ml 7% hydrogen peroxide (pH = 3) by magnetic stirring and slight heating to 30 °C. Meanwhile, 100 g calcium chloride dihydrate ($CaCl_2.2H_2O$) was dissolved in a further 500 ml 7 % hydrogen peroxide volume. When both salts were completely dissolved, the two clear solutions were poured together and a white precipitate started to form immediately, indicating calcium sulfate crystallization. The white dispersion was stirred at ambient temperature during 2 hours. Samples were taken at regular time intervals and the crystal size was studied by microscopy. In the first minutes, the crystals were in the range of 10 $\mu$m. After 2 hours, the crystals had reached an average length of about 150 $\mu$m. The crystals were needle shaped, and some sheet structures were observed. To remove the excess of liquid, the dispersion was put over a filter paper with a pore size of maximum 5 $\mu$m, and allowed to concentrate overnight. A total of 350 g thickened dispersion at pH 3 was obtained. The concentration of active oxygen in the Sample was in the range of 5 % - 7 %. The viscosity of the composition was in the range of 5,000 cP. The composition was stable in time.

EXAMPLE IV.

Approximately 250 $\mu$L of a 3 % solution of ferric EDTA (ethylenediaminetetracetic acid), at pH 7, was added to 3.5 grams of the composition obtained from EXAMPLE I.
The same amount of ferric EDTA was added to 3.5 grams of a 27.5 % wt $H_2O_2$ solution.
Both the 3.5 grams of the composition according to EXAMPLE I and the 3.5 grams $H_2O_2$ solution, both containing the ferric EDTA, were diluted with a quantity of tap water until the water contained 50 ppm of $H_2O_2$, determined with colorimetric reagent strips (Merck). In the diluted $H_2O_2$ solution, gas bubbles indicating Fe-catalyzed hydrogen peroxide decomposition  appeared almost instantly, whereas in the diluted composition according to EXAMPLE I, no gas bubbles could be observed during the course of the experiment.
The following table indicates the evolution of the hydrogen peroxide concentration (ppm) in both samples.

Table 3. Evolution of the hydrogen peroxide concentration (ppm) in diluted $H_2O_2$ (control) and composition according to the present invention

| Time (hours) | 0 h | 4 h | 18 h |
|---|---|---|---|
| Diluted $H_2O_2$ | 50 ppm | 20 ppm | 15 ppm |
| Composition according to EXAMPLE I | 50 ppm | 50 ppm | 45 ppm |

In this example, the stabilizing effect of the composition according to EXAMPLE I in the presence of Fe-catalyst is observed, compared to a regular hydrogen peroxide solution.

EXAMPLE V.

The composition obtained from Example I after centrifugation was mixed with 3 % wt of diethylenetriamine penta(methylene phosphonic acid) and dried in an air flow at approx. 25 °C. The resulting dry product could be ground into a fine powder and was found to be composed of approx. 15 % wt to 20 % wt of hydrogen peroxide. At least 80 % of the contained hydrogen peroxide was released within 30 seconds when 1 gram of the powder was dissolved in 500 mL of cold tap water.

**Claims**

1.  A peroxygen releasing composition comprising a dispersion of calcium sulfate in an aqueous hydrogen peroxide solution, the calcium sulfate being formed in hydrogen peroxide and present as crystals in fibre, needle or sheet form with an average crystal length in the range of 1 $\mu$m to 300 $\mu$m, the hydrogen peroxide being present in an amount comprised between 0.5 and 50 w %, the calcium sulfate being present in an amount comprised between 2.0 and 80.0 w %, and the composition having a viscosity of about 200 cP to about 20,000 cP, in the absence of additional thickening agent.

2.  The Composition according to claim 1 wherein the average length of the calcium sulfate crystals is in the range of about 10 $\mu$m to about 150 $\mu$m.

3.  The Composition according to any of claims 1 or 2 additionally comprising an additive to control crystal growth selected from the following organic compounds: phosphonate, such as *N,N,N',N'*-ethylenediaminetetra (methylene phosphonic acid), *N,N,N',N*-triethylenediaminetetra (methylene phosphonic acid), diethylenetriamine penta(methylene phosphonic acid), an acrylic-acid based polymer (polyacrylic acid), ethanol, or any combination thereof.

4.  Disinfection or bleaching composition according to any of claims 1 to 3, further comprising peracetic acid, quaternary ammonium compounds, enzymes, surfactants, benzoyl peroxide, persulfate, benzalkonium chloride, iodophores, ethanol or any combinations thereof.

5.  Method for producing a peroxygen release composition, comprising the steps of:

    (a) reacting a water soluble calcium containing salt with sulfuric acid or a salt thereof in an aqueous hydrogen peroxide solution at a reaction temperature of 5 to 80 °C in a mixing apparatus with a rapid and intensive mixing into a white dispersion of calcium sulfate crystals;
    (b) thickening the dispersion by way of a suitable concentration technique into a moist, viscous, pasty composition until a stable viscous dispersion or paste containing at least 2 wt % and preferably 10 wt % to 15 wt % of $CaSO_4$ is obtained.

6.  Method according to claim 5 wherein said aqueous hydrogen peroxide solution is a 1 % to 70 % by weight solution.

7.  Method according to any of the claims 5 or 6 wherein the molar ratio of calcium to sulfate is between 0.5 to 1 and 1 to 4.

8.  Method according to claim 7 wherein the water soluble calcium containing salt is calcium chloride or calcium nitrate.

9.  Method according to claim 7 wherein the salt of sulfuric acid is sodium sulfate or sodium bisulfate or potassium sulfate.

10. Method according to any of claims 5 to 9, wherein a crystallization process control agent is added during the reaction in the mixing apparatus, selected from the following organic compounds: phosphonate, such as *N,N,N',N'*-ethylenediaminetetra (methylene phosphonic acid), *N,N,N',N'*-triethylenediaminetetra (methylene phosphonic acid), diethylenetriamine penta(methylene phosphonic acid), an acrylic-acid based polymer (polyacrylic acid), ethanol, or any combination thereof.

11. Method according to any of the claims 5 to 9, wherein a crystallization process control agent is added after the thickening step, to the viscous dispersion or paste, selected from the following organic compounds: phosphonate, such as *N,N,N',N'*-ethylenediaminetetra (methylene phosphonic acid), *N,N,N',N'*-triethylenediaminetetra (methylene phosphonic acid), diethylenetriamine penta(methylene phosphonic acid), an acrylic-acid based polymer (polyacrylic acid), ethanol, or any combination thereof.

12. Method according to any of the aforementioned claims 5 to 11, wherein the composition is dried to a dry product by applying a suitable drying technique to said dispersion, selected from spray drying, fluidized bed drying, evaporation, vacuum drying, freeze drying, drying by air, belt drying, drying in a rotating drum, or any other suitable technique to remove moisture while not increasing the product temperature above the range of 60 °C to 80 °C during drying.

13. A dry composition obtained by the process of claim 12, containing:

    - at least about 50 wt % of calcium sulfate

- at least about 5 % wt to about 20 % wt of active oxygen
- at most about 20 % wt of water.

14. Use of a composition according to any of claims 1 to 4 or obtained according to any of claims 5 to 13 in cleaning, laundry, bleaching and health care applications.

Europäisches
Patentamt

European
Patent Office

Office européen
des brevets

## EUROPEAN SEARCH REPORT

Application Number

EP 12 16 7726

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 93/02963 A1 (PRAYON RUPEL TECHNOLOGIES [BE]) 18 February 1993 (1993-02-18) * example 8 * | 1-4,13 | INV. C01B15/037 C01F11/46 |
| X | GB 2 220 141 A (CHURCH & DWIGHT CO INC [US]) 4 January 1990 (1990-01-04) * page 12, line 17 - line 27; claims 1, 6-9 * | 1-14 | |
| A | DE 42 16 239 C1 (KLEIN, N., MANTHEY, W.) 2 September 1993 (1993-09-02) * page 4, line 1 - line 10 * * page 3, line 43 - line 46 * | 5-12 | |
| A,D | US 7 045 493 B2 (WANG XUE [US] ET AL) 16 May 2006 (2006-05-16) * the whole document * | 1-14 | |
| X | EP 0 202 359 A2 (SCHAEFFER HANS A BLOCK DRUG CO [US]) 26 November 1986 (1986-11-26) * claims * | 1-14 | TECHNICAL FIELDS SEARCHED (IPC) |
| X | US 6 479 451 B2 (PRICE KENNETH NATHAN [US]) 12 November 2002 (2002-11-12) * the whole document * | 1-14 | C01B C01F |
| A | US 2 018 955 A (HECKERT WINFIELD W ET AL) 29 October 1935 (1935-10-29) * example 5 * | 5-12 | |
| A | DE 42 27 511 C1 (HAMMER, H., WINKLER, D.) 22 July 1993 (1993-07-22) * column 3, line 61 - line 64 * | 5-12 | |

The present search report has been drawn up for all claims

| Place of search | Date of completion of the search | Examiner |
|---|---|---|
| The Hague | 28 September 2012 | Engelen, Karen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 12 16 7726

This annex lists the patent family members relating to the patent documents cited in the above-mentioned European search report.
The members are as contained in the European Patent Office EDP file on
The European Patent Office is in no way liable for these particulars which are merely given for the purpose of information.

28-09-2012

| Patent document cited in search report | | Publication date | Patent family member(s) | | | Publication date |
|---|---|---|---|---|---|---|
| WO 9302963 | A1 | 18-02-1993 | BE | 1005164 | A3 | 11-05-1993 |
| | | | CA | 2114652 | A1 | 18-02-1993 |
| | | | EP | 0646099 | A1 | 05-04-1995 |
| | | | FI | 940471 | A | 10-03-1994 |
| | | | WO | 9302963 | A1 | 18-02-1993 |
| GB 2220141 | A | 04-01-1990 | CA | 1329138 | C | 03-05-1994 |
| | | | DE | 3921133 | A1 | 18-01-1990 |
| | | | FR | 2633514 | A1 | 05-01-1990 |
| | | | GB | 2220141 | A | 04-01-1990 |
| | | | JP | 2069609 | C | 10-07-1996 |
| | | | JP | 2243616 | A | 27-09-1990 |
| | | | JP | 7103010 | B | 08-11-1995 |
| | | | SE | 469208 | B | 07-06-1993 |
| | | | SE | 8902319 | A | 30-12-1989 |
| | | | US | 4891211 | A | 02-01-1990 |
| DE 4216239 | C1 | 02-09-1993 | NONE | | | |
| US 7045493 | B2 | 16-05-2006 | AT | 553176 | T | 15-04-2012 |
| | | | AU | 2005272069 | A1 | 16-02-2006 |
| | | | BR | PI0513158 | A | 29-04-2008 |
| | | | CA | 2572839 | A1 | 16-02-2006 |
| | | | CN | 1981025 | A | 13-06-2007 |
| | | | EP | 1789524 | A2 | 30-05-2007 |
| | | | ES | 2385656 | T3 | 27-07-2012 |
| | | | JP | 2008506008 | A | 28-02-2008 |
| | | | US | 2006009371 | A1 | 12-01-2006 |
| | | | US | 2006063695 | A1 | 23-03-2006 |
| | | | WO | 2006016990 | A2 | 16-02-2006 |
| EP 0202359 | A2 | 26-11-1986 | AU | 580076 | B2 | 22-12-1988 |
| | | | CA | 1257545 | A1 | 18-07-1989 |
| | | | DE | 3587725 | D1 | 24-02-1994 |
| | | | DE | 3587725 | T2 | 28-04-1994 |
| | | | EP | 0202359 | A2 | 26-11-1986 |
| | | | IN | 164161 | A1 | 28-01-1989 |
| US 6479451 | B2 | 12-11-2002 | AR | 030930 | A1 | 03-09-2003 |
| | | | AU | 3859701 | A | 03-09-2001 |
| | | | BR | 0108608 | A | 12-11-2002 |
| | | | CA | 2397749 | A1 | 30-08-2001 |
| | | | CN | 1404525 | A | 19-03-2003 |
| | | | EP | 1257629 | A2 | 20-11-2002 |
| | | | JP | 2003524063 | A | 12-08-2003 |
| | | | MX | PA02008191 | A | 29-11-2002 |

EPO FORM P0459

For more details about this annex : see Official Journal of the European Patent Office, No. 12/82

EP 2 662 329 A1

**ANNEX TO THE EUROPEAN SEARCH REPORT
ON EUROPEAN PATENT APPLICATION NO.**                    EP 12 16 7726

This annex lists the patent family members relating to the patent documents cited in the above-mentioned European search report.
The members are as contained in the European Patent Office EDP file on
The European Patent Office is in no way liable for these particulars which are merely given for the purpose of information.

28-09-2012

| Patent document cited in search report | Publication date | Patent family member(s) | Publication date |
|---|---|---|---|
| | | US 2002004474 A1 | 10-01-2002 |
| | | WO 0162881 A2 | 30-08-2001 |
| US 2018955 A | 29-10-1935 | NONE | |
| DE 4227511 C1 | 22-07-1993 | AT 134280 T | 15-02-1996 |
| | | CA 2141575 A1 | 03-03-1994 |
| | | DE 4227511 C1 | 22-07-1993 |
| | | EP 0656154 A1 | 07-06-1995 |
| | | JP H08500465 A | 16-01-1996 |
| | | WO 9405054 A1 | 03-03-1994 |

For more details about this annex : see Official Journal of the European Patent Office, No. 12/82

14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 174891 A
- DE 1767796
- US 3234140 A
- US 4477390 A
- DE 2511143
- US 6465408 B, Hwa Lee S.

- US 6248707 B, Doetsch W.
- US 5380456 A, Woods W.G.
- US 5997764 A
- US 6083422 A
- US 7045493 B

**Non-patent literature cited in the description**

- DETIC. press comm, 2001